# FASCICULE DE BREVET EUROPEEN

(11) **EP 1 642 757 B1**
(45) Date de publication et mention de la délivrance du brevet: **24.06.2009**
(21) Numéro de dépôt: 05291956.0
(22) Date de dépôt: 21.09.2005
(51) Int. Cl.: B60J 7/12

(54) **Véhicule pourvu d'une couverture d'habitacle perméable à l'air**
Fahrzeug mit luftdurchlässiger Dachabdeckung
Vehicle with a air-permeable roof covering

(30) Priorité: 01.10.2004 FR 0410397
(43) Date de publication de la demande: 05.04.2006
(73) Titulaire: Heuliez, 79142 Cerizay Cedex (FR); CENTRE SCIENTIFIQUE ET TECHNIQUE DU BATIMENT, 75016 Paris 16 (FR)
(72) Inventeur: Gandemer, Jacques, 44470 Carquefou (FR); Queveau, Gérard, 79140 Le Pin (FR)
(74) Mandataire: Pichat, Thierry

(56) Documents cités:
- EP-A- 0 827 856
- DE-A1- 10 031 007
- DE-A1- 19 837 506
- DE-C- 909 892

## Description

L'invention concerne notamment la couverture de l'ouverture située au-dessus de l'habitacle d'un véhicule découvrable à toit mobile, par une structure perméable à l'air permettant le passage de l'air. Des objets de la présente invention concernent donc une couverture d'habitacle de véhicule et un véhicule ainsi équipé.

On appelle « couverture » un moyen adapté pour recouvrir sélectivement l'ouverture située au-dessus de l'habitacle du véhicule.

L'invention est particulièrement adaptée à un véhicule dont le toit est mobile, y compris amovible. De tels toits peuvent être, par exemple, des hard-top (typiquement amovibles), des toits rigides pliables ou rétractables, aussi connus sous le nom de Rétractop (TM), ou encore des capotes souples comme montré dans le document DE 198 37 506. Les deux derniers toits cités peuvent être motorisés de sorte à permettre le déplacement du toit par articulation ou glissement vis-à-vis du bâti structurel du véhicule, de manière partiellement ou entièrement automatisée, vers une position de rangement située a priori vers l'arrière du véhicule.

Les véhicules découvrables sont habituellement sujets à des circulations et remous d'air turbulents à l'intérieur de l'habitacle. Un but de l'invention est de réduire substantiellement voire de supprimer ces turbulences.

Pour cela, il est proposé que la couverture d'habitacle, en tant que telle et en tant qu'élément monté sur le véhicule, comprenne une structure perméable à l'air, de préférence avec une perméabilité comprise entre environ 10% et 70%.

Avantageusement, cette perméabilité sera assurée par des orifices traversant la couverture.

D'autres caractéristiques importantes sont revendiquées avec tout ou partie des avantages suivants :
- la réduction des recirculations et des pulsations d'air dans l'habitacle tout en laissant passer la lumière et l'air, d'où l'impression de se sentir dans un cabriolet sans en avoir les inconvénients,
- la couverture perméable protège des poussières véhiculées par les circulations d'air, des rafales de vent et dans une certaine mesure des bruits extérieurs. Elle permet également de donner à l'habitacle un caractère plus intime en limitant la visibilité depuis l'extérieur.
- la couverture perméable créant un flux d'air plus régulier, les turbulences autour du véhicule sont fortement réduites ce qui implique une meilleure pénétration dans l'air et donc une réduction prévue de la consommation.

Concernant le véhicule lui-même, équipé de la couverture précitée, différentes astuces de réalisation sont expliquées ci-après. Parmi elles, on note :
- que des (seconds) moyens de liaison libérables peuvent lier de façon amovible la couverture au toit mobile, en particulier lorsque le toit recouvre l'habitacle dans sa configuration fermée, tout en permettant alors de libérer cette couverture amovible de sa liaison avec le toit, de préférence avant un déplacement de ce seul toit à l'écart du dessus de l'habitacle,
- que ces moyens de liaison peuvent assurer une liaison entre la couverture et le toit mobile, de préférence avant le retrait de l'ensemble formé par la couverture d'habitacle liée au toit,
- que le toit mobile peut être articulé sur la structure du véhicule et être associé à des moyens de commande motorisée pour déplacer le toit vers une position de rangement située vers l'arrière du véhicule,
- que lesdits (seconds) moyens de liaison libérables peuvent être commandés de façon coordonnée avec les moyens de commande motorisée du toit, de sorte à pouvoir déplacer soit, ensemble, le toit et la couverture d'habitacle, soit le toit seul.

Une description encore plus détaillée de l'invention suit en référence aux dessins annexés donnés à titre d'exemple et dans lesquels :
La figure 1 représente une vue latérale d'un véhicule découvert et illustre le phénomène de turbulences d'air dans l'habitacle.
La figure 2 représente une vue latérale d'un véhicule équipé d'une couverture selon l'invention.
Les figure 3,4,5 représente trois configurations possibles d'un même véhicule selon l'invention.
La figure 6 représente, en vue de dessus, un véhicule selon l'invention,
Les figures 7A,7B,7C et 8A,8B,8C représentent des vues agrandies de différentes réalisations de la partie "D" de la couverture représentée figure 6.
La figure 9 représente une vue de dessus d'un véhicule avec la couverture pourvue de raidisseurs.
La figure 10 représente une vue de dessus d'un véhicule équipé de sa couverture, la demie-vue inférieure correspondant au véhicule de la figure 2, la demie-vue supérieure à une variante où la couverture s'étend également à l'endroit des vitres latérales.

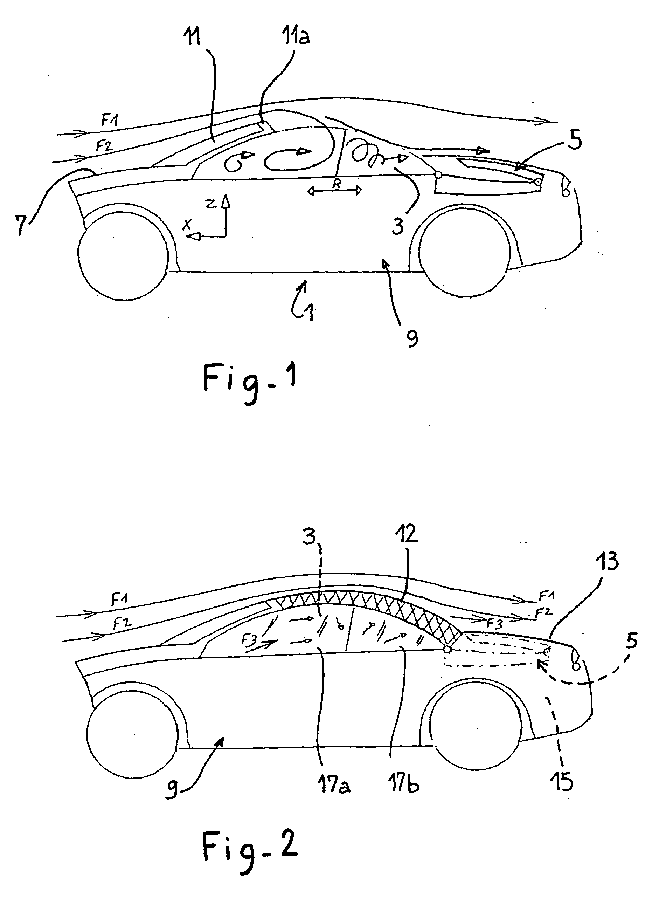

La figure 1 représente donc un véhicule 1 découvrable, ici découvert, c'est-à-dire avec son habitacle 3 au moins partiellement non recouvert par le toit 5.

Le véhicule est en mouvement selon une direction longitudinale X.

A une certaine distance de l'habitacle, les filets d'air représentés par la ligne F1 contournent globalement l'obstacle et suivent sensiblement le profil de la carrosserie 7 qui appartient à la structure 9 du véhicule.

Pour les filets d'air qui sont au contact immédiat de la carrosserie (couche limite) et sont représentés par la ligne F2, l'écoulement "décolle" en partie haute du pare-brise 11 en formant une recirculation fluide (zone R) qui se reboucle à l'intérieur de l'habitacle pour compenser un effet de cavité dépressionnaire créé en aval du pare-brise. Cette recirculation fluide est hautement fluctuante, turbulente, voire tourbillonnaire.

En fonction de l'architecture et des dimensions du véhicule (pare-brise, cavité habitacle, hauteur de la custode arrière etc....) et des régimes de vitesse des véhicules, cette recirculation fluctuante occupera tout ou partie de l'habitacle 3, (par exemple la moitié amont/avant de l'habitacle) avec alors une zone de recollement fluctuante plongeant dans la cavité 3.

Ces circulations turbulentes et pulsations peuvent avoir des vitesses locales élevées et des orientations variables, dont notamment des incidences verticales, ce qui les rend particulièrement désagréable pour les passagers.

La figure 2 montre un véhicule découvert équipé d'une couverture 12 selon l'invention, c'est-à-dire d'une couverture constituée structurellement perméable à l'air.

Le toit 5 est alors à l'écart du dessus de l'habitacle 3, ici rangé ou escamoté à l'arrière du véhicule, en l'espèce sous un capot 13 qui peut éventuellement être celui du coffre arrière 15.

La perméabilité de la couverture 12 est assurée par des orifices traversant sa structure.

Cette couverture s'étend ici au-dessus de l'habitacle 3, longitudinalement, suivant donc la direction longitudinale X du véhicule, depuis la traverse supérieure 11a de pare-brise où elle est liée, en particulier accrochée, à la structure 9 de ce véhicule (par exemple à cette traverse 11a), jusqu'à la limite avant du capot 13 de coffre, au voisinage duquel elle est également liée, en particulier accrochée, à nouveau à la structure fixe 9, et, latéralement, jusqu'au bord supérieur des vitres latérales avant et/ou arrière, 17a, 17b.

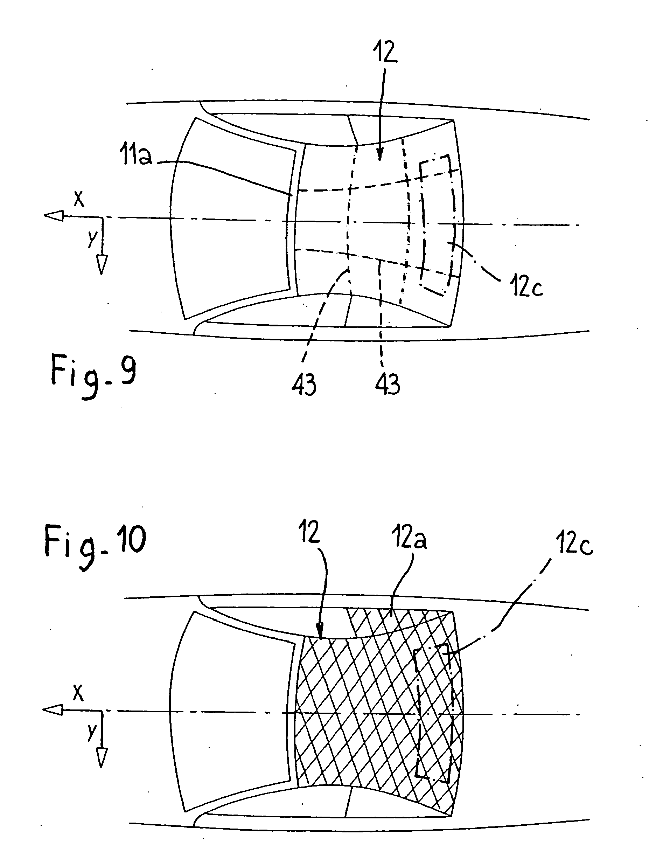

La couverture pourra au besoin recouvrir également les parties occupées par une partie au moins de ces vitres latérales, tel qu'illustré à la figure 10, demie-vue supérieure, où elle occupe la place de l'une des vitres latérales arrière, à l'endroit de son extension latérale 12a. Les deux vitres latérales pourraient être occupées.

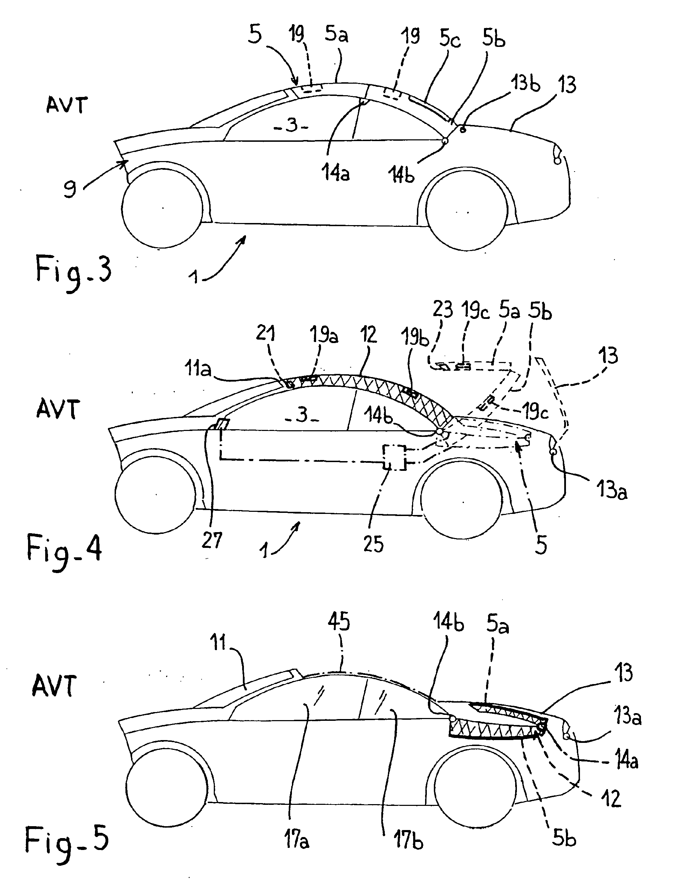

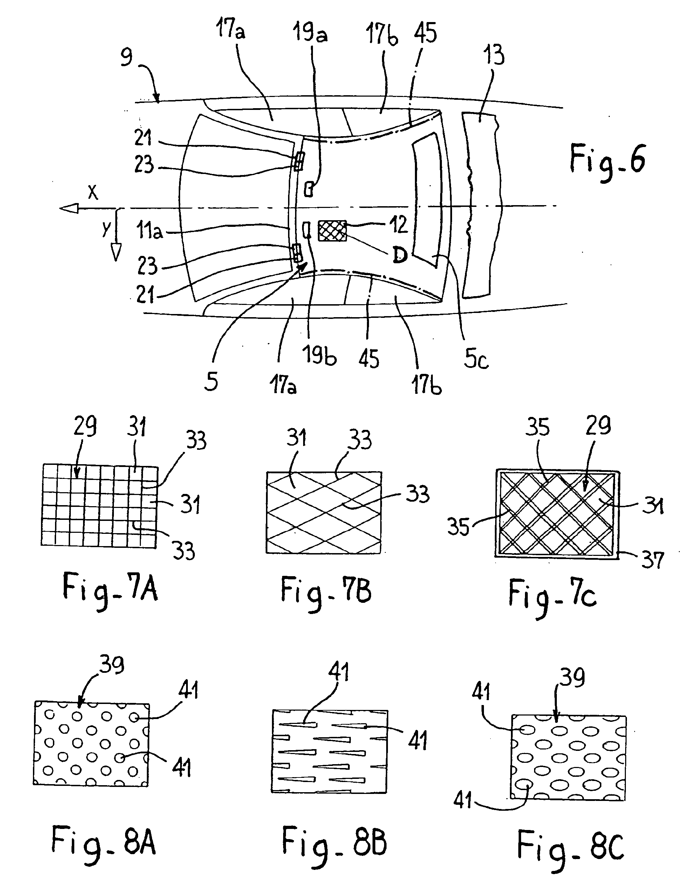

Il a été constaté qu'une telle disposition permet d'éviter ou de réduire notablement les phénomènes de turbulences et de pulsations décrits en relation avec la figure 1. Une ouverture arrière 12c (figures 9 et 10) pourrait être pratiquée dans la couverture 12 de façon sensiblement centrale, par exemple en face de la lunette arrière 5c qui peut aussi être prévue à l'arrière du toit 5 (figure 6, toit monobloc, type hard top ou figure 3, partie arrière 5b).

Pour obtenir ces différents effets aérodynamiques, le taux de perméabilité de la couverture a été choisi comme compris entre 10 et 70 % (à 15% près) et de préférence entre 20 et 50 %.

Le taux de perméabilité est défini comme étant le rapport entre la surface totale correspondante occupée par les orifices et la surface donnée de la couverture. Cette couverture perméable aux gaz, et éventuellement imperméable à l'eau, joue aérodynamiquement un rôle de "brise-vent" et on a noté une réduction d'un facteur d'environ deux des phénomènes de turbulences et de pulsations à l'intérieur de l'habitacle (en vitesse moyenne locale, en vitesse de pointe locale et en intensité de turbulence).

L'intérieur de l'habitacle 3 se trouve donc légèrement ventilé sans agitation désagréable, la couverture 12 étant visuellement peu perceptible depuis l'intérieur de l'habitacle.

La faible perceptibilité de la couverture pourra encore être accentuée en réduisant au maximum son épaisseur, par exemple en dessous de 1 mm. Il est à noter que l'intérieur de l'habitacle 3 est animé de faibles courants d'irrigation F3 (figure 2), des filets fluides rentrant et sortant indifféremment à travers la couverture perméable.

À titre illustratif, il s'agit figures 3 à 5 d'un véhicule découvrable à toit rigide 5 de type pliable, lié définitivement à la structure fixe 9 vis-à-vis de laquelle il est articulable; mais il pourrait s'agir de tout type de véhicule à toit mobile tel que hard-top ou capote souple.

Le toit 5 comprend au moins deux parties pliables l'une en regard de l'autre, ici respectivement une partie avant 5a et une partie arrière 5b située longitudinalement derrière la partie avant lorsque le toit est disposé au dessus de l'habitacle fermé (figure 3), et sensiblement face à elle (ici au-dessus), toit rangé (figure 5). Ici, le toit est alors sous le capot mobile 13, lequel peut s'ouvrir au moins de l'avant (AVT) vers l'arrière du véhicule, ici basculer autour d'un pivot transversal arrière 13a. Une ouverture vers l'avant est également envisagée, en particulier par basculement autour d'un pivot transversal avant 13b. En 14a est schématisé une articulation transversale (axe Y) entre les parties avant 5a et arrière 5b, 14b repérant l'articulation transversale arrière de la partie arrière 5b de toit par rapport à la structure 9 à laquelle elle est liée.

La figure 3 représente le véhicule 1 dans une configuration couverte, avec son toit 5 fermé, en position déployée.

La couverture se trouve alors juste sous le toit 5 dans la position que l'on retrouve sur la figure 4. La couverture peut alors avantageusement constituer le garnissage intérieur du toit.

La figure 4 représente le véhicule avec son toit 5 déplacé vers l'arrière du véhicule, la couverture étant alors en position fonctionnelle, au-dessus de l'habitacle 3.

Pour autoriser un tel mouvement du toit 5 indépendamment de la couverture d'habitacle 12 (que le toit soit d'ailleurs replié comme ici ou retiré à l'écart de la structure 9 du véhicule par exemple dans une solution hard top), des moyens libérables de liaison 19 sont avantageusement prévus pour assurer une liaison amovible entre le toit et la couverture 12 (voir figure 3) .

Ces moyens sont prévus pour partie sur la couverture 12. Il peut s'agir de moyens d'accrochage ou de crochetage, tels que des verrous. Sur l'illustration de la figure 4, on trouve ainsi des crochets avant et arrière 19a, 19b montés mobile sous le toit 5, ici respectivement en face inférieure (toit fermé) de ses parties avant et arrière 5a, 5b pour coopérer avec des anneaux ou des barreaux fixes 19c, 19d prévus en regard sur le dessus de la couverture 12.

Lorsque le toit et la couverture 12 doivent être liés ensemble comme par exemple sur la figure 3 où ils recouvrent donc tous les deux l'habitacle 3 (au moins en partie), les verrous 19a, 19b sont dans leur position de verrouillage. Par contre, lorsque la couverture 12 et le toit 5 doivent être séparés l'un de l'autre, on va libérer les verrous 19a, 19b, soit par un automatisme soit manuellement (ils devront alors être accessibles à l'utilisateur, de préférence depuis l'intérieur du véhicule, un accès étant alors prévu pour cela). Ainsi, la couverture 12 sera liée/accrochée au toit mobile 5 lorsque le toit recouvrera l'habitacle dans une configuration fermée (par exemple figure 3), la couverture étant par contre libérée du toit de préférence avant le retrait ou le déplacement de ce dernier, seul, (voire par exemple figure 4), à moins que l'on souhaite déplacer ensemble la couverture 12 et le toit (soit en les retirant entièrement de la structure 9 du véhicule, soit en déplaçant les deux ensemble, par exemple via une réalisation articulée de la couverture d'habitacle 12 vis-à-vis de la structure 9 du véhicule). Si la couverture 12 et le toit 5 (quel qu'il soit) doivent être déplacés ensemble, on laissera alors avantageusement dans leur état verrouillé les verrous, ou moyens de liaison libérables, 19. Tel pourrait être le cas si l'on passait par exemple de l'état de la figure 3 à celui de la figure 5 où le véhicule est totalement découvert.

La figure 5 montre le véhicule découvert. Dans cette troisième configuration, le toit 5 ainsi que la couverture 12 ont été repliés, ou plus généralement déplacés, ensemble vers l'arrière du véhicule. Lesdites parties de toit sont repliées en vis-à-vis et les moyens de liaison 19 sont verrouillés.

Pour ce faire en partant de la première configuration, la couverture 12, liée donc alors au toit en 19, est, avec ce toit, séparée (décrochée) de la traverse 11a de pare-brise, puis le mouvement de basculement du toit (monté ici articulé en 14b sur la structure ou bâti 9 du véhicule) emmène avec lui la couverture.

Si l'on veut permettre, comme le schématise les figures 4 et 5, une mobilité indépendante entre la couverture d'habitacle 12 et le toit 5 (quel qu'il soit), des moyens libérables de liaison repérés 21,23 sur la figure 4 seront prévus pour une liaison amovible entre la structure 9 du véhicule (en particulier à l'endroit de sa traverse de pare-brise 11a) et respectivement la couverture 12 et le toit 5.

A l'image des moyens libérables 19, les moyens de liaison 21, 23 comprendront d'un côté une partie mobile et de l'autre une partie fixe permettant le verrouillage de la partie mobile et assurant donc le verrouillage du toit et/ou de la couverture 12 dans leur position de recouvrement de l'habitacle 3, vis-à-vis de la structure 9. Il peut en particulier s'agir de verrous mobiles ou de crochets engageant de manière libérable des anneaux ou des barres prévus en correspondance, en particulier donc sur la traverse supérieure de pare-brise 11a. En décrochant le verrou 23 on pourra ne déplacer que le toit 5 (figure 4). En déverrouillant le verrou 21, on pourra déplacer la couverture 12.

Plus à l'arrière, les moyens d'articulation arrière 14b pourraient être remplacés par d'autres verrous libérables liés d'un côté à la structure 9 et de l'autre à l'arrière du toit 5 et/ou à l'arrière de la couverture 12, de manière à retenir le toit et/ou la couverture vis-à-vis de la structure du véhicule ou à permettre le retrait complet de l'un et/ou de l'autre, ensemble ou indépendamment, par rapport à ladite structure 9.

Il est à noter que les opérations de liaison/séparation de la couverture 12 ainsi que le déplacement du toit pourront avantageusement être motorisés et donc partiellement ou totalement automatisés. Pour cela, des moyens de commande motorisée et automatisée sont schématisés en 25 sur la figure 4 et sont reliés d'un côté au moyen d'articulation du toit (bras oscillants, glissières......) et/ou à tout ou partie des moyens de verrouillage précités 19,21,23, ainsi que par exemple au tableau de bord 27 du véhicule pour que le conducteur puisse à volonté ouvrir ou fermer le toit 5 et/ou déplacer en position de recouvrement ou de libération la couverture 12.

La troisième configuration figure 5 peut correspondre à celle d'un cabriolet.

Les figures 7A à 8C représentent plusieurs modes de réalisation structurelle de la couverture 12.

La couverture 12 occupe, comme le toit 5, toute la largeur structurellement disponible au-dessus de l'habitacle.

Sur les figures 7A à 7C, il s'agit d'une structure 29 à mailles dont les mailles 31 sont formées entre des fils 33 (figures 7A et 7B) ou des bandelettes 35 (figure 7C) entrecroisés. Les fils ou les bandelettes peuvent être souples mais avantageusement tendu(e)s ou rigides. Une structure formant l'un parmi un treillis et une grille, est ici obtenue.

Afin d'augmenter leur résistance mécanique, les fils 33 ou les bandelettes 35 pourront être reliées à leurs intersections, par exemple par soudage ou par collage.

Les mailles 31 ont ici la forme de carrés ou de losanges, mais peuvent prendre d'autres formes.

La structure à bandelettes entrecroisées peut être réalisée sous forme cannée.

De telles structures à mailles pourront avantageusement être des matériaux souples mais tendus, tels que des toiles, obtenus par exemple par tissage et fixés sur un cadre rigide 37 sur la figure 7C, ici un cadre périphérique, l'ensemble venant recouvrir l'habitacle. Le cadre 37 pourrait être en plusieurs parties articulées.

Les figures 8A à 8C représentent une structure en forme de plaques minces 39 ajourées par des ouvertures 41 traversant les plaques de part en part dans le sens de l'épaisseur. Les ouvertures 41 peuvent prendre différentes formes telles que circulaires (figure 8A), en forme de V (figure 8B), ovales (figure 8C) de nid d'abeille ou autres.

La mise en forme pourra par exemple être réalisée par injection, par moulage ou par des procédés associant des fibres et des résines durcissables: la matière de la structure aura alors une forme continue ce qui permettra la conservation d'une forme donnée et améliorera la résistance. Par forme donnée on entend aussi bien le motif de la trame, c'est-à-dire l'ensemble des mailles, que la forme générale en volume de la couverture. La conservation d'une forme donnée aura un intérêt tout particulier lorsque la structure devra suivre le contour intérieur d'un toit rigide ce qui sera le cas en particulier des toits rigides pliables ou des hard-top.

La figure 9 montre, au-dessus de l'habitacle, une couverture 12 rigidifiée par des raidisseurs 43 qui s'étendent sensiblement à la fois longitudinalement (axe X) et transversalement (axe Y) au véhicule.

Les raidisseurs 43 pourront également s'étendre en biais afin de tenir compte de la trame des mailles ou des orifices. Ils pourront être noyés avec la structure de la couverture et donc formés avec elle.

Plutôt que d'être amovible, la couverture 12 pourrait être mobile par rapport à la structure 9 du véhicule, entre ses états de recouvrement de l'habitacle 3 (figure 4) et de dégagement à l'écart d'au dessus une partie au moins de cet habitacle (figure 5), par exemple par coulissement le long de glissières latérales prévues le long de brancards ou barreaux 45, eux-mêmes fixes ou amovibles vis-à-vis de la structure 9 et s'étendant latéralement (figure 6) dans la continuité des limites latérales de la traverse supérieure 11a de pare-brise, sensiblement suivant l'axe X. Elle glisserait alors, de façon articulée ou non, le long de telles glissières.

## Revendications

1. Véhicule convertible comprenant une structure (9) et un toit (5) mobile par rapport à cette structure, tel que toit rigide pliable, hard-top ou capote souple, **caractérisé en ce qu'**il comprend une couverture (12) d'habitacle, structurellement perméable à l'air et des moyens libérables (21) de liaison entre la structure du véhicule et la couverture, de sorte que, lorsque le toit mobile est placé au moins en partie à l'écart d'une position au-dessus de l'habitacle (3), la couverture (12) est disposable de façon amovible ou mobile au-dessus de cet habitacle.

2. Véhicule convertible selon la revendication 1, **caractérisé en ce que** la couverture d'habitacle (12) recouvre entièrement l'habitacle (3) lorsqu'elle est disposée au-dessus de cet habitacle, que lesdits moyens libérables (21) de liaison la lient à la structure (19) de ce véhicule et que le toit rigide est plié à l'écart du dessus de l'habitacle.

3. Véhicule convertible selon la revendication 1 ou 2, **caractérisé en ce que** la couverture d'habitacle (12) recouvre l'habitacle (3) sensiblement à la place du toit mobile (5), lorsque ladite couverture est disposée au-dessus de cet habitacle, que lesdits moyens libérables (21) de liaison la lient à la structure du véhicule et que le toit est à l'écart du dessus de l'habitacle.

4. Véhicule convertible selon la revendication 3, **caractérisé en ce que** la couverture d'habitacle (12,12a) recouvre également une zone occupée par les vitres latérales (17b) du véhicule.

5. Véhicule convertible selon l'une des revendications précédentes, **caractérisé en ce que** des seconds moyens libérables (19,19a,19b,19c) de liaison sont prévus pour lier la couverture (12) au toit mobile (5), au moins lorsque le toit recouvre l'habitacle (12) dans une configuration fermée de ce toit.

6. Véhicule convertible selon la revendication 5, **caractérisé en ce que** lesdits seconds moyens libérables (19,19a,19b,19c) de liaison sont prévus pour lier ainsi la couverture au toit mobile (5), tout en permettant de libérer cette couverture de sa liaison avec le toit, avant un déplacement de ce seul toit à l'écart du dessus de l'habitacle (12).

7. Véhicule convertible selon les revendications 5 ou 6, **caractérisé en ce que** lesdits seconds moyens libérables de liaison assurent une liaison entre la couverture d'habitacle (12) et le toit mobile (5) avant le retrait de l'ensemble formé par la couverture d'habitacle liée au toit amovible.

8. Véhicule convertible selon l'une des revendications précédentes, **caractérisé en ce que** le toit mobile (5) est articulé sur la structure du véhicule et ce véhicule possède des moyens de commande motorisée (25) pour déplacer le toit (5) entre une position au-dessus de l'habitacle (3) et une position de rangement située vers l'arrière du véhicule, à l'écart du dessus de l'habitacle.

9. Véhicule convertible selon la revendication 8, quand elle dépend de l'une des revendications 5 à 7, **caractérisé en ce que** les seconds moyens libérables (19 ; 19a ; 19b ; 19c) de liaison sont commandés de façon coordonnée avec les moyens de commande motorisée (25) du toit mobile (5), de sorte à pouvoir déplacer soit, ensemble, le toit mobile (5) et la couverture d'habitacle (12), soit le toit mobile seul.

10. Véhicule convertible selon l'une des revendications précédentes, **caractérisé en ce que** la couverture (12) définit un garnissage intérieur du toit (5) .

11. Véhicule convertible selon l'une des revendications précédentes, **caractérisée en ce que** la structure perméable à l'air de la couverture d'habitacle (12) possède un taux de perméabilité à l'air compris entre 10% et 70%, ou entre 20% et 50%.

12. Véhicule convertible selon l'une des revendications précédentes, **caractérisée en ce que** la couverture d'habitacle (12) présente :
- une structure à mailles (31,33,35), telle qu'une structure tissée ou cannée, de sorte que des orifices (31) de passage d'air sont définis entre le maillage de ladite structure,
- ou des ajours (41).

13. Véhicule convertible selon l'une des revendications précédentes, **caractérisé en ce que** la couverture d'habitacle (12) est pourvue :
- d'une première et d'une seconde séries de raidisseurs (43), ceux de la première série s'étendant transversalement à ceux de la seconde séries,
- et/ou de raidisseurs (43) noyés avec ladite structure de la couverture.

14. Véhicule convertible selon l'une des revendications précédentes, **caractérisées en ce que** ladite structure perméable est réalisée dans un matériau souple et est fixé à un cadre rigide (37).

## Claims

1. Convertible vehicle comprising a structure (9) and a roof (5) that can be moved relative to this structure, such as a foldable rigid roof, hard top or flexible hood, **characterized in that** it comprises a passenger-compartment cover (12), structurally permeable to the air and releasable means (21) for connection between the structure of the vehicle and the cover, so that, when the movable roof is placed at least partly at a distance from a position above the passenger compartment (3), the cover (12) can be placed in a removable or movable manner above the passenger compartment.

2. Convertible vehicle according to Claim 1, **characterized in that** the passenger-compartment cover (12) entirely covers the passenger compartment (3) when:
- it is placed over this passenger compartment,
- the said releasable connection means (21) bind it to the structure (19) of this vehicle,
- and the rigid roof is folded away from above the passenger compartment.

3. Convertible vehicle according to Claim 1 or 2, **characterized in that** the passenger-compartment cover (12) covers the passenger compartment (3) substantially in place of the movable roof (5), when:
- said cover is placed above this passenger compartment,
- the said releasable connection means (21) bind it to the structure of the vehicle,
- and the roof is away from above the passenger compartment.

4. Convertible vehicle according to Claim 3, **characterized in that** the passenger-compartment cover (12, 12a) also covers a zone occupied by the side windows (17b) of the vehicle.

5. Convertible vehicle according to one of the preceding claims, **characterized in that** second releasable connection means (19, 19a, 19b, 19c) are provided to bind the cover (12) to the movable roof (5), at least when the roof covers the passenger compartment (12) in a closed configuration of this roof.

6. Convertible vehicle according to Claim 5, **characterized in that** said second releasable connection means (19, 19a, 19b, 19c) are provided to thus bind the cover to the movable roof (5), while making it possible to release this cover from its connection with the roof, before a movement of the roof only, away from above the passenger compartment (12).

7. Convertible vehicle according to Claim 5 or 6, **characterized in that** said second releasable means of connection provide a connection between the passenger-compartment cover (12) and the movable roof (5) before the assembly formed by the passenger-compartment cover bound to the removable roof is retracted.

8. Convertible vehicle according to one of the preceding claims, **characterized in that** the movable roof (5) is articulated on the structure of the vehicle and this vehicle has motorized control means (25) for moving the roof (5) between a position above the passenger compartment (3) and a stored position situated towards the rear of the vehicle, away from above the passenger compartment.

9. Convertible vehicle according to Claim 8, when it depends on one of Claims 5 to 7, **characterized in that** the second releasable connection means (19; 19a; 19b; 19c) are controlled in a coordinated manner with the motorized control means (25) of the movable roof (5), so as to be able to move either the movable roof (5) and the passenger-compartment cover (12) together, or the movable roof only.

10. Convertible vehicle according to one of the preceding claims, **characterized in that** the cover (12) defines an internal headlining of the roof (5).

11. Convertible vehicle according to one of the preceding claims, **characterized in that** the permeable-to-air structure of the passenger-compartment cover (12) has a permeability-to-air rate ranging between 10% and 70%, or between 20% and 50%.

12. Convertible vehicle according to one of the preceding claims, **characterized in that** the passenger-compartment cover (12) has:
- a mesh structure (31, 33, 35), such as a woven or caned structure, so that orifices (31) for the passage of air are defined between the mesh work of the said structure,
- or slots (41).

13. Convertible vehicle according to one of the preceding claims, **characterized in that** the passenger-compartment cover (12) is provided:
- with a first and a second series of stiffeners (43), those of the first series extending across those of the second series,
- and/or with stiffeners (43) blended in with the said structure of the cover.

14. Convertible vehicle according to one of the preceding claims, **characterized in that** said permeable structure is made of a flexible material and is attached to a rigid frame (37).

## Patentansprüche

1. Umwandelbares Fahrzeug mit einem Aufbau (9) und einem Dach (5), das in Bezug zu diesem Aufbau beweglich ist, wie zum Beispiel ein starres Faltdach, Hard-Top oder ein biegsames Verdeck, **dadurch gekennzeichnet, dass** es eine Fahrgastzellenabdeckung (12), die struktural für Luft durchlässig ist, und freigebbare Verbindungsmittel (21) zwischen dem Aufbau des Fahrzeugs und der Abdeckung, aufweist, so dass, wenn das bewegliche Dach zumindest zum Teil in Abstand von einer Position oberhalb der Fahrgastzelle (3) platziert ist, die Abdeckung (12) abnehmbar oder beweglich oberhalb dieser Fahrgastzelle angeordnet werden kann.

2. Umwandelbares Fahrzeug nach Anspruch 1, **dadurch gekennzeichnet, dass** die Fahrgastzellenabdeckung (12) die Fahrgastzelle (3) ganz abdeckt, wenn sie oberhalb dieser Fahrgastzelle angeordnet ist, wenn die freigebbaren Mittel (21) sie mit dem Aufbau (19) dieses Fahrzeugs verbinden, und wenn das starre Dach in Abstand von oberhalb der Fahrgastzelle gefaltet ist.

3. Umwandelbares Fahrzeug nach Anspruch 1 oder 2, **dadurch gekennzeichnet, dass** die Fahrgastzellenabdeckung (12) die Fahrgastzelle (3) im Wesentlichen an der Stelle des beweglichen Daches (5) abdeckt, wenn die Abdeckung oberhalb dieser Fahrgastzelle angeordnet ist, wenn die freigebbaren Verbindungsmittel (21) sie mit dem Aufbau des Fahrzeugs verbinden, und wenn das Dach in Abstand von oberhalb der Fahrgastzelle ist.

4. Umwandelbares Fahrzeug nach Anspruch 3, **dadurch gekennzeichnet, dass** die Fahrgastzellenabdeckung (12, 12a) auch eine Zone abdeckt, die von den Seitenscheiben (17b) des Fahrzeugs belegt ist.

5. Umwandelbares Fahrzeug nach einem der vorhergehenden Ansprüche, **dadurch gekennzeichnet, dass** zweite freigebbare Verbindungsmittel (19, 19a, 19b, 19c) vorgesehen sind, um die Abdeckung (12) mit dem beweglichen Dach (5) zumindest dann zu verbinden, wenn das Dach die Fahrgastzelle (12) in einer geschlossenen Konfiguration dieses Daches abdeckt.

6. Umwandelbares Fahrzeug nach Anspruch 5, **dadurch gekennzeichnet, dass** die zweiten freigebbaren Verbindungsmittel (19, 19a, 19b, 19c) vorgesehen sind, um die Abdeckung mit dem beweglichen Dach (5) so zu verbinden und gleichzeitig das Freigeben dieser Abdeckung aus ihrer Verbindung mit dem Dach vor einem Bewegen dieses Daches allein in Abstand von oberhalb der Fahrgastzelle (12) zu erlauben.

7. Umwandelbares Fahrzeug nach den Ansprüchen 5 oder 6, **dadurch gekennzeichnet, dass** die zweiten freigebbaren Verbindungsmittel eine Verbindung zwischen der Fahrgastzellenabdeckung (12) und dem beweglichen Dach (5) vor dem Zurückziehen der Einheit, die aus der Fahrgastzellenabdeckung verbunden mit dem abnehmbaren Dach gebildet ist, sicherstellen.

8. Umwandelbares Fahrzeug nach einem der vorhergehenden Ansprüche, **dadurch gekennzeichnet, dass** das bewegliche Dach (5) auf dem Aufbau des Fahrzeugs angelenkt ist, und dass dieses Fahrzeug motorisierte Steuermittel (25) besitzt, um das Dach (5) zwischen einer Position oberhalb der Fahrgastzelle (3) und eine Verstauposition, die sich zur Rückseite des Fahrzeugs in Abstand von oberhalb der Fahrgastzelle hin befindet, zu bewegen.

9. Umwandelbares Fahrzeug nach Anspruch 8, wenn er von einem der Ansprüche 5 bis 7 abhängt, **dadurch gekennzeichnet, dass** die zweiten freigebbaren Verbindungsmittel (19; 19a; 19b; 19c) koordiniert mit den motorisierten Steuermitteln (25) des beweglichen Daches (5) derart gesteuert sind, dass sie entweder gemeinsam das bewegliche Dach (5) und die Fahrgastzellenabdeckung (12) oder nur das bewegliche Dach bewegen können.

10. Umwandelbares Fahrzeug nach einem der vorhergehenden Ansprüche, **dadurch gekennzeichnet, dass** die Abdeckung (12) eine Innenverkleidung des Daches (5) bildet.

11. Umwandelbares Fahrzeug nach einem der vorhergehenden Ansprüche, **dadurch gekennzeichnet, dass** der luftdurchlässige Aufbau der Fahrgastzellenabdeckung (12) eine Durchlässigkeitsrate für Luft zwischen 10 % und 70 % oder zwischen 20 % und 50 % besitzt.

12. Umwandelbares Fahrzeug nach einem der vorhergehenden Ansprüche, **dadurch gekennzeichnet, dass** die Fahrgastzellenabdeckung (12) Folgendes aufweist:
- eine Maschenstruktur (31, 33, 35), wie zum Beispiel eine gewebte oder geflochtene Struktur, derart, dass Luftdurchgangsöffnungen (31) zwischen der Vermaschung der Struktur definiert sind,
- oder Durchbrüche (41).

13. Umwandelbares Fahrzeug nach einem der vorhergehenden Ansprüche, **dadurch gekennzeichnet, dass** die Fahrgastzellenabdeckung (12) mit Folgendem versehen ist:
- eine erste und eine zweite Reihe von Versteifern (43), wobei sich die der ersten Reihe quer zu denen der zweiten Reihe erstrecken,
- und/oder Versteifer (43), die in die Struktur der Abdeckung eingelassen sind.

14. Umwandelbares Fahrzeug nach einem der vorhergehenden Ansprüche, **dadurch gekennzeichnet, dass** die durchlässige Struktur aus einem biegsamen Material hergestellt und an einem starren Rahmen (37) befestigt ist.
